**Europäisches Patentamt**

**European Patent Office**

**Office européen des brevets**

(19)

(11) Veröffentlichungsnummer: **0 119 456**
**A2**

(12) ## EUROPÄISCHE PATENTANMELDUNG

(21) Anmeldenummer: **84101453.3**

(22) Anmeldetag: **17.08.81**

(51) Int. Cl.³: **E 04 C 1/40**

(30) Priorität: **03.10.80 DE 3037409**

(43) Veröffentlichungstag der Anmeldung: **26.09.84**
**Patentblatt 84/39**

(84) Benannte Vertragsstaaten: **AT BE CH DE FR GB IT LI LU NL SE**

(60) Veröffentlichungsnummer der früheren Anmeldung nach Art. 76 EPÜ: **0049348**

(71) Anmelder: **OTAVI MINEN AG, Hynspergstrasse 24, D-6000 Frankfurt/Main (DE)**
Anmelder: **Dr. Carl Riffer Baustoffwerke K.G., Urmitz-Bahnhof, D-5403 Mühlheim-Kärlich 3 (DE)**

(72) Erfinder: **Riffer, Carl, Dr., Bismarckstrasse 25, D-5400 Koblenz (DE)**
Erfinder: **Paul, Joachim, Berliner Ring 145, D-6980 Wertheim (DE)**

(74) Vertreter: **Solf, Alexander, Dr., Patentanwälte Dr. Hasse, Dr. Solf & Zapf Asamstrasse 8, D-8000 München 90 (DE)**

(54) **Vorrichtung zum Verfüllen einer Kammer, insbesondere eines Hohlblocksteins mit insbesondere einem Mörtel.**

(57) Die Erfindung betrifft eine Vorrichtung zum Verfüllen der Kammern eines Hohlblocksteins mit einem Mörtel, dadurch gekennzeichnet, daß ein Hubtisch (18) mit einer Befülleinrichtung (19) kombiniert ist und daß der Hubtisch (18) mindestens eine Kolbenzylindereinheit (20) aufweist, wobei auf dem Kolbenkopf (21) ein Tragrahmen (22) sitzt, der die Hubtischplatte (23) trägt und auf der Hubtischplatte mehrere aufrechtstehende Hubstege (24) angeordnet sind.

EP 0 119 456 A2

# PATENTANWÄLTE

Zugelassene Vertreter beim Europäischen Patentamt
European Patent Attorneys

# DR. HASSE
# DR. SOLF & ZAPF

München - Wuppertal 0119456

Ausscheidungsanmeldung aus 81 106356.9      8. Dezember 1983

Anmelder:                                    1794-1 EPA/I/wi

1) OTAVI MINEN AG            2) Dr. Carl Riffer Baustoffwerke KG
   Hynspergstr. 24              Urmitz-Bahnhof
   6000 Frankfurt/Main 18       6403 Mülheim-Kärlich 3
   Bundesrepublik Deutschland   Bundesrepublik Deutschland

## Vorrichtung zum Verfüllen einer Kammer, insbesondere eines Hohlblocksteins mit insbesondere einem Mörtel

Die Erfindung betrifft eine Vorrichtung zum Verfüllen von Kammern, insbesondere eines Hohlblocksteins mit insbesondere einem Mörtel, vorzugsweise zur Durchführung des in der europäischen Patentanmeldung 81 106356 beschriebenen Verfahrens.

Hohlblocksteine mit integrierter Wärmedämmung sind aus der DE-OS 28 25 508 bekannt. Die Füllung besteht aus Kunststoffpartikeln, die oberflächlich unter Freilassung von gasdurchlässigen Zwischenräumen miteinander verbunden sind, wobei die aufgeschäumten Kunststoffteilchen randlich in den Kammerwänden verankert sind. Bei der Herstellung der bekannten Hohlblocksteine werden die Kammern der Steine

Asamstraße 8, D-8000 München 90
Telefon (089) 653665; Telefax (089) 653218
Telex: 5214168 soza d

Patentanwalt Dr. Ing. Dipl.-Ing. W. Hasse
Patentanwalt Dr.-Ing. Dipl.-Ing. A. Solf
Patentanwalt Dipl.-Ing. Chr. Zapf

oder Steinrohlinge mit einer lockeren Schüttung aus Partikeln eines thermoplastischen Kunststoffs gefüllt; dann wird eine Injektionslanze in die Schüttung eingeführt und durch diese ein Heißgas, insbesondere Wasserdampf, bis zum oberflächlichen Aneinandersintern der Partikel eingeblasen.

Die Verwendung der Hohlblocksteine mit integrierter Wärmedämmung soll im Mauerwerk eine besonders hohe Wärmedämmfähigkeit und eine günstige Wasserdampfdurchlässigkeit gewährleisten. Zudem soll die Wärmespeicherung begünstigt werden.

Nachteilig bei den bekannten Hohlblocksteinen ist die aufwendige Herstellung der Füllung, wozu ein Lanzengerät erforderlich ist. Außerdem entspricht die Füllung nicht dem mineralischen Aufbau des Leichtbetons des Hohlblocksteins, woraus Inhomogenitäten resultieren.

Kürzlich ist ein anderes Verfahren zur Herstellung von Hohlblocksteinen mit integrierter Wärmedämmung vorgeschlagen worden, wonach eine rieselfähige Füllmasse aus einem teilchenförmigen Isoliermaterial und einem Bindemittel in die Hohlräume der Steine eingebracht und dort ausgehärtet wird. Als Isoliermaterial sollen sich alle bekannten anorganischen und organischen Schaumstoffe eignen, wobei geschäumte Polystyrolteilchen bevorzugt werden. Als Bindemittel werden alle bekannten aushärtbaren Bindemittel angegeben; vorzugsweise sollen jedoch pulverförmige hydraulische Bindemittel Verwendung finden. Zur Verbesserung der Haftung des Bindemittels auf den Schaumstoffteilchen wird ein Kleber, vorzugsweise eine wässrige Lösung

- 3 -

von Hydroxymethylzellulose, zugesetzt. Zudem kann ein Abbindeverzögerer in die rieselfähige Mischung eingebracht
werden. Die Masse wird in die Hohlräume des Steins während
der Herstellung oder danach eingefüllt. Die Aushärtung
soll im ersteren Fall im wesentlichen durch die Reaktion
mit der Feuchtigkeit der umgebenden Steinwandungen erfolgen. Beim Verfüllen fertig abgebundener Steine soll die
Erhärtung durch die Reaktion mit dem Kleberlösungsmittelwasser sichergestellt werden.

Die Verwendung von anorganischen Schaumstoffen ist nach
diesem Vorschlag lediglich alternativ genannt worden. Ein
Lösungsweg wird nicht angegeben. Die Herstellung einer
rieselfähigen Masse entsprechend dem aufgezeigten Verfahrensweg für die Verwendung von Polystyrolteilchen ist bei
Verwendung von anorganischen Schaumstoffteilchen wohl nicht
möglich, so daß der Vorschlag lediglich in bezug auf die
Verwendung von Teilchen aus organischen Schaumstoffen beachtlich ist. Demgemäß weisen die nach dem vorgeschlagenen
Verfahren hergestellten Hohlblocksteine auch etwa die gleichen Inhomogenitäten auf wie die oben beschriebenen bekannten Hohlblocksteine. Hinzukommt, daß die Trockenrohdichte
der Füllmasse selbst bei Verwendung von Polystyrolteilchen
als Zuschlagstoff relativ hoch ist, woraus eine relativ
geringe Wärmedämmfähigkeit resultiert.

Die beiden Hohlblocksteintypen mit integrierter Wärmedämmung weisen außer den beschriebenen Nachteilen einen ganz
besonderen weiteren Nachteil auf. Bei einem Einwirken von
Hitze wird die Füllung schmelzen, und es werden schädliche
Gase aus dem Zuschlagstoff freigesetzt.

Aufgabe der Erfindung ist, eine relativ einfach aufgebaute Vorrichtung zu entwickeln, mit der Hohlkammern gefüllt werden können, wobei die Vorrichtung insbesondere nach dem in der europäischen Anmeldung 81 106356 beschriebenen Verfahren arbeitet und insbesondere ohne weiteres in den Herstellungsprozeß von Hohlblocksteinen eingeschaltet werden kann.

Diese Aufgabe wird durch eine Vorrichtung gelöst, die die Kombination eines Hubtisches mit einer Befülleinrichtung aufweist. Vorteilhaft ist, wenn der Hubtisch mindestens eine Kolbenzylindereinheit aufweist, wobei auf dem Kolbenkopf ein Tragrahmen sitzt, der die Hubtischplatte trägt und auf der Hubtischplatte mehrere aufrecht stehende Hubstege angeordnet sind. Zudem ist vorteilhaft, wenn unter der Hubtischplatte Vibratoren angeflanscht sind. Zweckmäßigerweise ist die Befülleinrichtung auf einem verfahrbaren Maschinenrahmen angeordnet, der aus unteren Längsstreben und oberen Längsstreben sowie die Längsstreben verbindenden Stützen besteht, wobei die Stützen über Querstreben miteinander verbunden sind. Vorzugsweise ist der Maschinenrahmen mit an den Längsstreben angeordneten Rädern ausgerüstet und kann auf Schienen hin- und hergefahren werden. Zwischen den Stützen sollte zweckmäßigerweise ein Maschinentisch befestigt sein, auf dem im seitlichen Randbereich jeweils eine Schiene angeordnet ist, auf der Tischoberfläche ein Füllkasten aufsitzen und der Füllkasten außenseitig seitlich Ränder besitzen, die auf den Schienen rollen, wobei der Füllkasten lediglich Seitenwände, eine Rückwand und eine Vorderwand sowie einen Deckel aufweist, der eine Füllöffnung frei läßt.

Die Seitenwände stehen vorzugsweise über mehrere Schottstege miteinander in Verbindung und über der Einfüllöffnung des Füllkastens ist vorzugsweise ein Vorratssilo angeordnet. Insbesondere ist in der Verlängerung des Arbeitstisches fluchtend ein Lochtisch angeordnet, der in Verlängerung der Schienen seitlich die Schienen trägt, wobei zweckmäßigerweise der Lochtisch einseitig mit Scharnieren an den Stützen und/oder am Maschinentisch befestigt ist und außerdem auf Auflagerstreben ruht. Nach einer besonderen Ausführungsform der Erfindung ist die Tischplatte des Lochtischs als Schablone ausgeführt und weist eine den Kammern von Lochsteinen entsprechende Lochverteilung mit Löchern auf. Nach einer weiteren Ausführungsform der Erfindung ist zum Antrieb des Füllwagens ein Schwenkhebelsystem vorgesehen, das schwenkbar einseitig an den Längsstreben und anderseitig über eine Schubstange an den Seitenwänden des Füllwagens angeordnete Schwenkarme aufweist, wobei etwa mittig der Schwenkarme jeweils ein Kolbenkopf einer Kolbenzylindereinheit angelenkt ist, deren Zylinder wiederum am Maschinenrahmen an einer Querstrebe schwenkbar befestigt ist.

Die beschriebene Vorrichtung ermöglicht es, im Produktionsprozeß von Hohlblocksteinen ohne zeitliche Beeinträchtigung der Fertigung die Hohlräume der Hohlblocksteine mit z.B. einem Frischmörtel zu verfüllen, so daß Hohlblocksteine mit integrierter Wärmedämmung erzeugt werden können.

Anhand der Zeichnung wird die Erfindung beispielhaft näher erläutert. Es zeigen:

0119456

Fig. 1    schematisch eine Seitenansicht der Vorrichtung in Ausgangsstellung;

Fig. 2    schematisch eine Seitenansicht der Vorrichtung in Befüllstellung;

Fig. 3    schematisch eine Draufsicht auf die Vorrichtung in der Ausgangsstellung gemäß

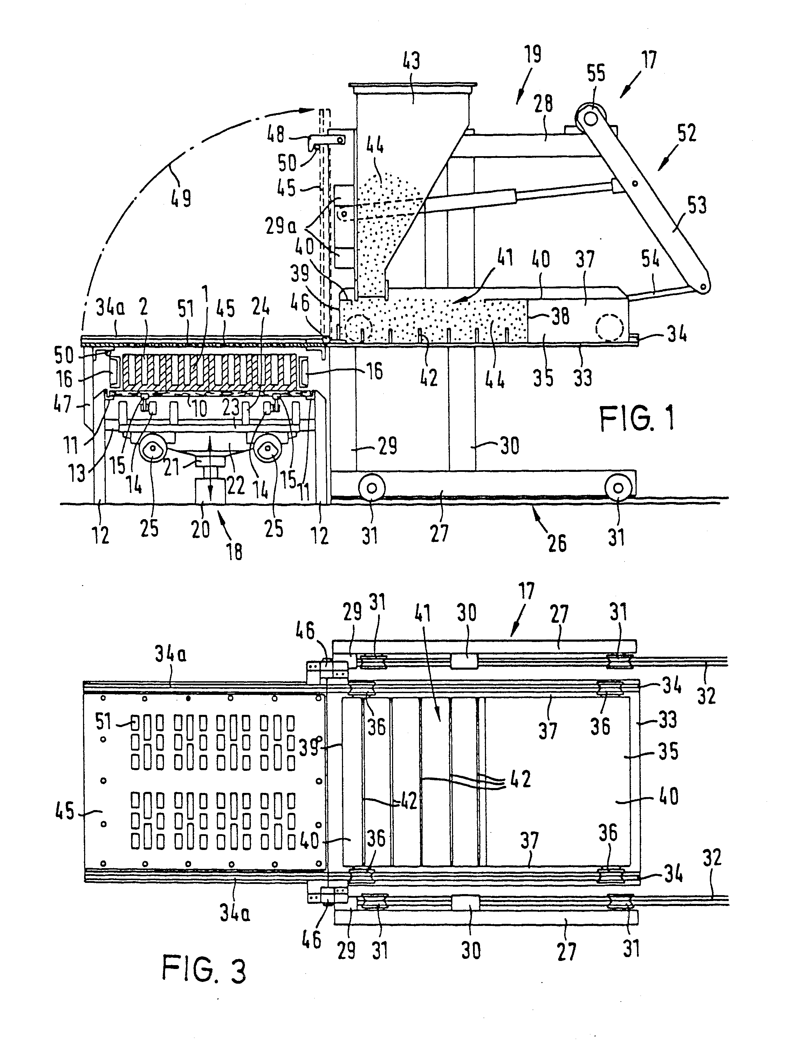

Fig. 1 ohne Antriebssystem;

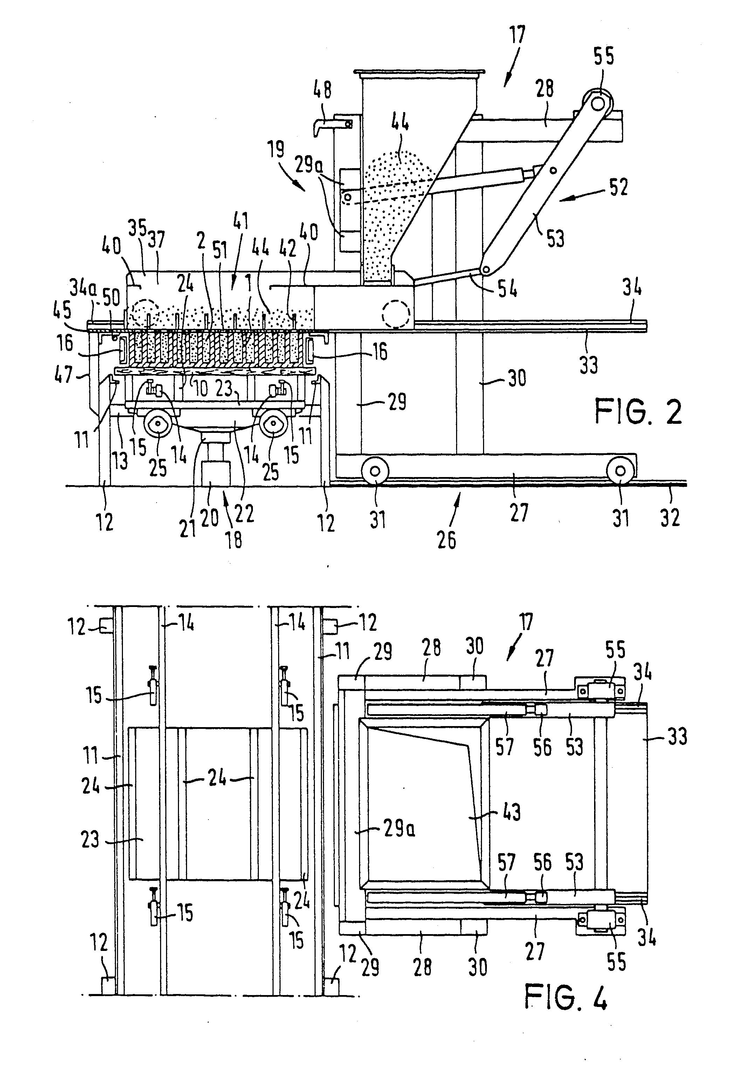

Fig. 4    schematisch eine Draufsicht ohne Lochtisch;

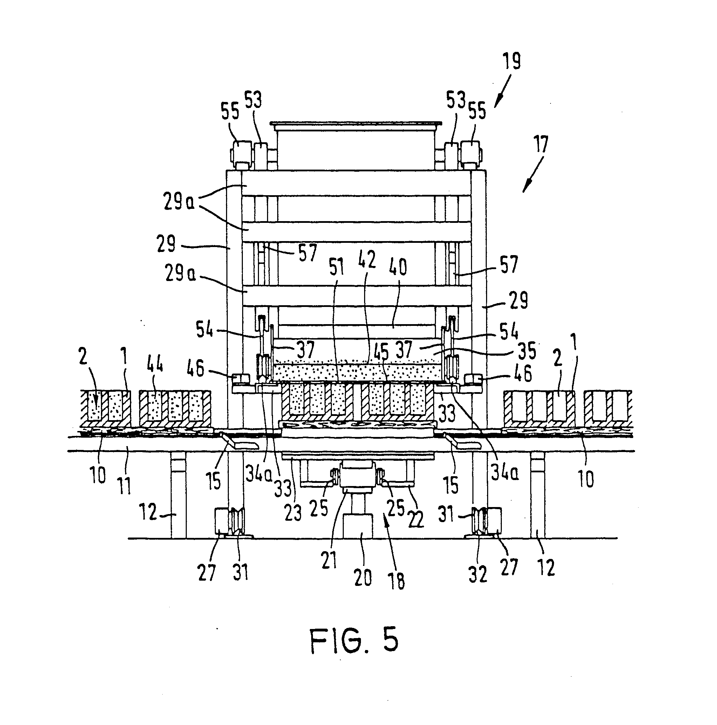

Fig. 5    schematisch eine Vorderansicht der Vorrichtung.

Die erfindungsgemäße Vorrichtung dient zum Verfüllen der Kammern 2 der Hohlblocksteine 1 mit dem erfindungsgemäßen Frischmörtel bzw. mit dem erfindungsgemäßen Mittel. Die Vorrichtung kann in den laufenden Produktionsprozeß integriert werden. Sie wird vorzugsweise dort aufgestellt, wo die frischen, noch nicht vollständig abgebundenen Steine zu einem Pulk mehrerer Steine zusammengefaßt zum Lager transportiert werden. Dabei sind nur geringfügige Ergänzungen bestehender Anlagen erforderlich.

Zum Beispiel werden, wie in der Fig. 1 bis 5 dargestellt, üblicherweise mehrere neben- und hintereinander angeordnete Steine 1 auf einem Brett 10 antransportiert. Das Brett 10 gleitet und ruht dabei seitlich auf winkelförmigen Auflageschienen 11 einer Transportbahn, die im wesentlichen die Stützen 10 und die Querstreben 13 aufweist. Zwischen den Schienen 11 und parallel zu diesen sind Transportketten 14 oder dergleichen mit Mitnehmern 15 vorgesehen, wobei die Mitnehmer 15 hinter die Bretter 10 greifen und diese entsprechend der Förderbewegung der Ketten taktweise transportieren. Zudem befindet sich seitlich neben und über der Transportbahn eine Vorrichtung zum Zusammenschieben der auf Lücke antransportierten Steine, von der lediglich die Schubbacken 16 in Fig. 1 und 2 eingezeichnet sind.

Die Erfindung betrifft die Befüllvorrichtung 17, die seitlich neben der Transportbahn aufgestellt ist. Die Vorrichtung besteht im wesentlichen aus zwei Teilen, nämlich dem Hubtisch 18, der zwischen den Schienen 11 unterhalb der Bretter 10 montiert ist, und der eigentlichen Befülleinrichtung 19, die seitlich neben der Transportbahn steht.

Der Hubtisch 18 weist mindestens eine Kolbenzylindereinheit 20 auf, wobei auf dem Kolbenkopf 21 ein Tragrahmen 22 sitzt, der die Hubtischplatte 23 trägt. Auf der Hubtischplatte sind mehrere aufrechtstehende, sich parallel zu den Schienen 11 erstreckende Hubstege 24 angeordnet. Unter der Hubtischplatte 23 sind vorzugsweise an sich bekannte Vibratoren 25 angeflanscht, deren Funktion weiter unten beschrieben wird. Mit dem Hubtisch 18 kann ein mit den Steinen 1 beladenes Brett 10 aus den Schienen 11 angehoben werden, wobei die Hubstege 24 unter das Brett greifen (Fig. 4). Der Hubtisch 18 setzt nach dem Absenken das Brett wieder in die Schienen 11 ein.

Die Befülleinrichtung 19 ist auf einem verfahrbaren Maschinenrahmen 26 angeordnet, der aus den unteren Längsstreben 27 und den oberen Längsstreben 28 sowie den die Längsstreben verbindenden Stützen 29 und 30 besteht, wobei die Stützen 29 über Querstreben 29a miteinander verbunden sind. Der Maschinenrahmen 26 ist vorzugsweise mit an den Längsstreben 27 angeordneten Rädern 31 ausgerüstet und auf Schienen 32 verfahrbar.

Zwischen den Stützen 29 und 30 ist ein Maschinentisch 33 befestigt, auf dem im seitlichen Randbereich jeweils eine Schiene 34 angeordnet ist. Auf der Tischoberfläche sitzt ein Füllkasten 35 auf (Fig. 1). Der Füllkasten besitzt außenseitig seitlich Räder 36, die auf den Schienen 34 rollen, so daß der Kasten 35 hin- und herfahrbar gelagert ist. Der Füllkasten 35 weist keinen Boden auf, sondern lediglich Seitenwände 37, eine Rückwand 38 und eine Vorderwand 39. Ferner ist ein Deckel 40 vorgesehen, der eine Füllöffnung 41 freiläßt. Vorzugsweise stehen die Seitenwände 37 noch über mehrere Schottstege 42 miteinander in Verbindung.

Über die Einfüllöffnung 41 des Füllwagens bzw. Füllkastens 35 sitzt bei dessen Ausgangsstellung ein am Maschinenrahmen 26 befestigtes Vorratssilo 43, das mit der Frischmörtelmasse 44 gefüllt ist.

In Verlängerung des Arbeitstisches 33 in Richtung zur Transportbahn ist fluchtend ein Lochtisch 45 angeordnet, der in Verlängerung der Schienen 34 seitlich die Schienen 34a trägt, so daß der Füllwagen 35 über den Lochtisch rollen kann. Der Lochtisch ist einseitig mit Scharnieren 46 an den Stützen 29 und/oder am Maschinentisch 33 befestigt und ruht anderseitig auf an den Stützen 12 sitzenden Auflagerstreben 47.

Aufgrund der Scharnieranordnung ist der Lochtisch 45 hochklappbar. Er kann, wenn er nicht gebraucht wird, in die in Fig.1 gestrichelt gezeichnete Stellung in Pfeilrichtung 49 hochgeklappt und mit dem an der Stütze 29 befestigten Haken 48 gehaltert werden, wozu zweckmäßigerweise ein seitlich am Lochtisch angeordneter Stift 50 dient.

Die Tischplatte des Lochtisches 45 ist als Schablone ausgeführt und weist eine den Kammern 2 der Lochsteine 1 entsprechende Lochverteilung mit Löchern 51 auf (Fig. 3), wobei die Löcher 51 genau über den Kammern 2 angeordnet sind. Die Schablone ist leicht auswechselbar, so daß die Befüllvorrichtung für die verschiedensten Formate verwendet werden kann, wenn die entsprechende Schablone eingesetzt wird.

Zum Antrieb des Füllwagens 35 ist ein an sich bekanntes Schwenkhebelsystem 52 vorgesehen, das die schwenkbar einseitig bei 55 an den Längsstreben 28 und anderseitig über eine Schubstange 54 an den Seitenwänden 37 des Füllwagens 35 angeordneten Schwenkarme 53 aufweist, wobei etwa mittig der Schwenkarme 53 jeweils der Kolbenkopf 56 der Kolbenzylindereinheiten 58 angelenkt ist, deren Zylinder wiederum am Maschinenrahmen 26 an einer Querstrebe 29a schwenkbar befestigt ist.

Die Funktionsweise der erfindungsgemäßen Vorrichtung ist folgende. Im Bedarfsfall wird die Vorrichtung auf den Schienen 32 an die Transportbahn herangerollt und der Lochtisch 45 heruntergeklappt. Dann wird der zusammengeschobene Steinpulk mit der Hubvorrichtung 18 unter die Schablone des Lochtischs 45 gehoben. Anschließend wird der Füllwagen 35 mit dem Schwinghebelsystem 52 auf den Schienen 34 und 34a über den Lochtisch 45 geschoben. Dabei wird er aus dem Vorratssilo 43 mit Füllmasse 44 gefüllt, bis der Deckel 40 die Öffnung des Silos 43 wieder verschließt. Die Füllmasse läuft, da der Füllwagen 35 keinen Boden hat, durch die Löcher 51 der Schablone in die Kammer 2 der Steine 1. Dabei werden die Vibratoren 25 des Hubtischs 18 betätigt, damit eine besonders gleichmäßige Befüllung gewährleistet werden kann.

Wenn die Kammern 2 gefüllt sind, fährt der Füllwagen 35 wieder in seine Ausgangsstellung zurück, wobei ein Abstreifer die Löcher 51 abstreift und der Füllvorgang des Wagens beginnt, wenn der Deckel 40 die Siloöffnung wieder freigibt. Gleichzeitig senkt der Hubtisch 18 die gefüllten Steine ab, die weitertransportiert werden. Eine neue Charge wird dabei herangeführt, worauf der Füllvorgang wiederholt wird.

Die erfindungsgemäße Vorrichtung arbeitet voll automatisch, denn auch das Vorratssilo kann automatisch beschickt werden. Ferner ist möglich, mit dem Schwenkhebelsystem Schüttelbewegungen durchzuführen, was ebenfalls zur gleichmäßigeren Befüllung beitragen kann. Dabei dienen die Schottstege 42 des Füllwagens 35 als Schüttelroste. Anstelle der Schottstege 42 kann man aber auch z.B. rotierende Rechen zum gleichen Zweck vorsehen.

Eine weitere Variante der Erfindung sieht vor, daß der Arbeitstisch 33 mit seinen Einrichtungen höhenverstellbar am Maschinenrahmen 26 angeordnet ist.

Patentansprüche

1. Vorrichtung zum Verfüllen der Kammern eines Hohlblocksteins mit einem Mörtel, dadurch gekennzeichnet, daß ein Hubtisch (18) mit einer Befülleinrichtung (19) kombiniert ist.

2. Vorrichtung nach Anspruch 1, dadurch gekennzeichnet, daß der Hubtisch (18) mindestens eine Kolbenzylindereinheit (20) aufweist, wobei auf dem Kolbenkopf (21) ein Tragrahmen (22) sitzt, der die Hubtischplatte (23) trägt und auf der Hubtischplatte mehrere aufrechtstehende Hubstege (24) angeordnet sind.

3. Vorrichtung nach Anspruch 2, dadurch gekennzeichnet, daß unter der Hubtischplatte (23) Vibratoren (25) angeflanscht sind.

4. Vorrichtung nach einem oder mehreren der Ansprüche 1 bis 3, dadurch gekennzeichnet, daß die Befülleinrichtung (19) auf einem verfahrbaren Maschinenrahmen (26) angeordnet ist, der aus den unteren Längsstreben (27) und den oberen Längsstreben (28) sowie den die Längsstreben verbindenden Stützen (29, 30) besteht, wobei die Stützen (29) über Querstreben (29a) miteinander verbunden sind.

5. Vorrichtung nach Anspruch 4, dadurch gekennzeichnet, daß der Maschinenrahmen (26) mit an den Längsstreben (27) angeordneten Rädern (31) ausgerüstet ist und auf Schienen (32) hin- und hergefahren werden kann.

6. Vorrichtung nach Anspruch 4 und/oder 5, dadurch gekennzeichnet, daß zwischen den Stützen (29 und 30) ein Maschinentisch (33) befestigt ist, auf dem im seitlichen Randbereich jeweils eine Schiene (34) angeordnet ist, auf der Tischoberfläche ein Füllkasten (35) aufsitzt und der Füllkasten außenseitig seitlich Räder (36) besitzt, die auf den Schienen (34) rollen, wobei der Füllkasten (35) lediglich Seitenwände (37), eine Rückwand (38) und eine Vorderwand (39) sowie einen Deckel (40) aufweist, der eine Füllöffnung (41) freiläßt.

7. Vorrichtung nach Anspruch 6, dadurch gekennzeichnet, daß die Seitenwände (37) über mehrere Schottstege (42) miteinander in Verbindung stehen.

8. Vorrichtung nach einem oder mehreren der Ansprüche 4 bis 7, dadurch gekennzeichnet, daß über der Einfüllöffnung (41) des Füllkastens (35) ein Vorratssilo (43) angeordnet ist.

9. Vorrichtung nach einem oder mehreren der Ansprüche 4 bis 8, dadurch gekennzeichnet, daß in Verlängerung des Arbeitstisches (33) fluchtend ein Lochtisch (45) angeordnet ist, der in Verlängerung der Schienen (34) seitlich die Schienen (34a) trägt.

10. Vorrichtung nach Anspruch 9, dadurch gekennzeichnet, daß der Lochtisch (45) einseitig mit Scharnieren (46) an den Stützen (29) und/oder am Maschinentisch (33) befestigt ist und anderseitig auf Auflagerstreben (47) ruht.

11. Vorrichtung nach einem oder mehreren der Ansprüche 4 bis 10, dadurch gekennzeichnet, daß die Tischplatte des Lochtischs (45) als Schablone ausgeführt ist und eine den Kammern (2) der Lochsteine (1) entsprechende Lochverteilung mit Löchern (51) aufweist.

12. Vorrichtung nach einem oder mehreren der Ansprüche 4 bis 11, dadurch gekennzeichnet, daß zum Antrieb des Füllwagens (35) ein Schwenkhebelsystem (52) vorgesehen ist, das die schwenkbar einseitig bei (55) an den Längsstreben (28) und anderseitig über eine Schubstange (54) an den Seitenwänden (37) des Füllwagens (35) angeordneten Schwenkarme (53) aufweist, wobei etwa mittig der Schwenkarme (53) jeweils der Kolbenkopf (56) der Kolbenzylindereinheit (58) angelenkt ist, deren Zylinder wiederum am Maschinenrahmen (26) an einer Querstrebe (29a) schwenkbar befestigt ist.

FIG. 1

FIG. 3

0119456

FIG. 2

FIG. 4

FIG. 5